# EUROPEAN PATENT APPLICATION

(11) **EP 3 736 364 A1**
(43) Date of publication of application: **11.11.2020**
(21) Application number: 20173238.5
(22) Date of filing: 06.05.2020
(51) Int. Cl.: D04B 1/14, D04B 1/22, D04B 21/14, D04B 21/20

(54) **A TEXTILE PANEL AND A METHOD OF MANUFACTURE OF A TEXTILE PANEL**

(30) Priority: 08.05.2019 GB 201906454
(71) Applicant: Dartex Coatings Limited, Nottingham NG10 1FZ (GB)
(72) Inventor: Lakin, Elizabeth, Nottingham NG10 1FZ (GB); Scott, Ian, Nottingham NG10 1FZ (GB); Haxby, Richard, Nottingham NG10 1FZ (GB); McMaster, Simon, Nottingham NG1 1GF (GB)
(74) Representative: Bartle Read

(57) **Abstract**

The invention provides a textile panel comprising a knitted textile layer (12) comprising yarn of a first type (14), and a coating applied to at least one face of the textile layer. The textile layer comprises at least one textile sensor (18) formed by an electrically conductive region of the textile layer which comprises yarn (16) of a second type incorporated in the knit of the textile layer, the second type of yarn being electrically conductive. The invention also provides a method of manufacturing a textile panel, comprising knitting a textile layer (12) using a first type of yarn (14) and a second type of yarn (16), the second type of yarn being incorporated in the knit of the textile layer in at least one predetermined region to form a textile sensor, the method further comprising applying a coating to the textile layer.

## Description

The present invention is concerned with applications of textile sensors.

For an exploration of the field of textile sensors, reference is directed to WO2015/022671, assigned to Footfalls and Heartbeats Limited. This document discloses a number of ways in which textiles incorporating electrically conductive yarns can be designed and manufactured to serve as sensors responsive to various physical parameters including compressive pressure.

One application of the present invention is in the field of cover panels for beds and seating. Specific practical issues relating to that field will be considered below, although it must be understood that the invention has broader potential applications and can solve other practical and technical problems.

Consider first of all the field of pressure sensing mattresses. It is desirable for a range of reasons to provide for monitoring of the pressure exerted on a mattress by a person supported on it. For example, persons confined to bed for a protracted period can suffer from bed sores (decubitus ulcers). Periodically changing position in the bed can alleviate this risk. It would be useful to provide for pressure monitoring in order to detect when - due to a prolonged period of immobility - a patient might need assistance in changing position. Sensing the pressure exerted on the mattress can also be used to obtain behavioural data, such as data on sleep patterns and on levels of activity.

There is of course a whole range of different sensor types used to monitor pressure. The pressure exerted on a mattress by a person may for example be sensed by use of a pressure sensing mat placed beneath the patient. An example of a sensor technology used in pressure sensitive mats is provided in WO2005/068961 (Tekscan Inc.), and relies upon resistance changes in a pressure sensitive ink disposed between electrode pairs. But pressure sensitive mats of this type suffer from certain disadvantages. Often they do not stretch and conform to body shape as well as bed linen, and so can affect comfort and - if used with vulnerable patients - could even contribute to formation of bed sores, by creating local pressure or shear concentrations. Existing pressure mats are often relatively complex and expensive.

According to a first aspect of the present invention there is a textile panel comprising a knitted or woven textile layer comprising yarn of a first type, and a coating applied to at least one face of the textile layer, the textile layer comprising at least one textile sensor formed by an electrically conductive region of the textile layer which comprises yarn of a second type incorporated in the knit or weave of the textile layer, the second type of yarn being electrically conductive.

According to a second aspect of the present invention there is a method of manufacturing a textile panel, comprising knitting or weaving a textile layer using a first type of yarn and a second type of yarn, the second type of yarn being incorporated in the knit or weave of the textile layer in at least one predetermined region to form a textile sensor, the method further comprising applying a coating to the textile layer.

The present invention makes it possible to incorporate sensor functionality into textile cover panels in a manner that need not affect their bulk, nor their material properties such as their ability to stretch and conform to the body of the user. Panels manufactured in accordance with the present invention can nonetheless be simple and robust, without being expensive to manufacture.

Specific embodiments of the present invention will now be described, by way of example only, with reference to the accompanying drawings, in which:-
Figure 1 is a plan view of a mattress cover embodying the present invention, a coating being omitted to reveal internal details;
Figure 2 is an enlarged and stylised representation of the structure of a knitted textile; and
Figure 3 is a simplified representation of a graphical user interface implemented on a digital computer.

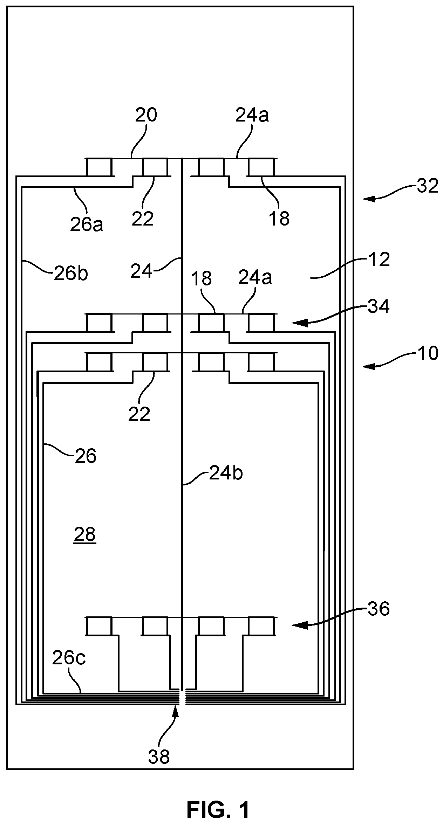

The mattress cover 10 depicted in Figure 1 comprises a textile layer 12 and a coating, which is omitted from Figure 1 to reveal the textile layer 12. Medical mattress covers using a protective plastics coating applied to a textile are in themselves known and commercially available, e.g. from Dartex Coatings Ltd. of Nottingham, UK. They can be engineered to have highly advantageous physical properties. The coating can provide a barrier impermeable to liquid contaminants such as bodily fluids, thus preventing protecting the mattress beneath. The coating can be skin-friendly, so that although a bedsheet will generally be interposed between a mattress cover and the patient, any accidental skin contact is not problematic. The protective coating can be washable and abrasion resistant. It can be vapour permeable. Covers of this type can have sufficient capacity to stretch to reduce shear or pressure concentrations on the user which could contribute to discomfort or to the formation of bed sores.

The present embodiment incorporates into this type of mattress cover a set of textile pressure sensors, providing for monitoring of pressure applied by a patient lying on the mattress cover 10.

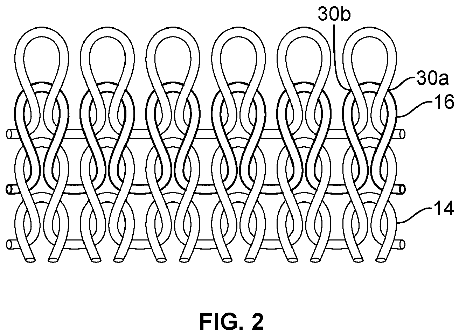

The textile layer 12 of the present embodiment is a knitted textile. Other embodiments of the invention could instead utilise woven textiles, but the flexibility of machine knitting makes possible straightforward incorporation of the required textile sensors into the textile layer 12, and the elasticity of knitted textiles makes them well suited to the present application. A conventional stitch pattern of a knitted textile is represented, by way of example, in Figure 2, and is seen to comprise a series of stitches or loops arranged in a row along what is referred to as the "course" direction, each stitch or interlocking with a neighbouring stitch in an adjacent row displaced from it along the "wale" direction. In this example two yarns are used. A first yarn 14 is a conventional, electrically insulating textile yarn. A second yarn 16, depicted in heavier black lines, is an electrically conductive yarn suitable to be used in formation of a textile sensor, or of an electrical connection to a textile sensor. The difference in electrical resistance (Ohms per metre of yarn) between the first and second yarns 14, 16 may be a factor of ten or more, or may be a factor of a hundred or more, or may be a factor of a thousand or more.

Computer controlled machine knitting processes make it possible to incorporate selected yarns in predetermined regions of the textile layer 12, thereby forming both sensors and connections.

Looking again at Figure 1, the textile layer 12 incorporates multiple textile sensors 18. In this example the textile sensors are formed by incorporation of yarn of high electrical conductivity (low electrical resistance) in predetermined regions of the knitted textile forming the panel 12.

Textile sensors may take a variety of different forms, as explained in the aforementioned prior art document WO2015/022671, assigned to Footfalls and Heartbeats Limited. They may in particular (and without limitation) be capacitive or resistive. Either type of sensor can be pressure responsive, and either can in principle be used in the implementing the present invention, but in the illustrated embodiment the textile sensors 18 are of resistive type. The region of the textile forming the textile sensor 18 forms a path for electrical conduction of a signal. The resistance of that path varies with applied pressure. Signal variations can thus be used to obtain data relating to variation of applied pressure. Each textile sensor 18 comprises a first electrical connection 20 and a second electrical connection 22. Associated control electronics serve to apply a known voltage across the first and second electrical connections of each textile sensor 18, and to measure electrical current passed, so that sensor resistance can be determined from Ohms' law. Other means of determining sensor resistance may be adopted.

In the present embodiment the first electrical connections 20 of each of the textile sensors 18 are connected together forming a common line 24. The second electrical connections 22 of each of the textile sensors 18 are each individually connected to a respective signal line 26. The common line 24 and the signal lines 26 are in the present embodiment integrally formed with the textile layer 12 by electrically conductive yarns incorporated into it, although in other embodiments they could be formed using electrical wires separately formed from the textile layer 12.

The present invention is not limited to any particular type or material for the yarns from which the textile layer 12 is formed but the textile sensors 18 and the electrical lines 24, 26 may comprise silver coated fibres and/or metal filaments, e.g. comprising stainless steel and/or conductive polymers. The textile sensors 18 and the electrical lines 24, 26 comprise yarns of high electrical conductivity and other regions 28 of the textile layer 12 comprise yarns of low electrical conductivity.

The invention is not characterised by any particular physical mechanism or theoretical explanation for the change of electrical resistance created in the textile sensors 18 by application of pressure, but it is believed that in the present embodiment changes of contact resistance between portions of the yarn contribute to these changes. Looking again at Figure 2, it can be appreciated that there are multiple contact regions 30a, 30b in each stitch where yarn of one row of stitches overlaps and potentially contacts yarn of a neighbouring row of stitches. Electrical conductivity of the textile depends at least to some degree on the resistance to current flow across each of these contacts. Application of pressure to the textile sensor 18 with a component normal to the plane of the textile layer 12 reduces this contact resistance and so reduces the bulk resistance of the textile sensor 18, the change of resistance being related to the magnitude of the pressure. In the present embodiment the first and second electrical connections 20, 22 are separated along the wale direction, so that it is resistance along this direction, due to conduction from one row of stitches to another via contact points 30a, 30b, that is measured.

The present invention is not limited to any particular shape, number and layout of the textile sensors 18 but in the present embodiment each of them is of rectangular shape and the sensors 18 are arranged in a pattern of rows and columns, with a row 32 of textile sensors 18 in a shoulder region of the mattress cover 10, two rows 34 in a sacral region, and a further row 36 in a foot region. Sensors 18 in each row are connected together by lateral common lines 24a, each of which meets a central longitudinal line 24b extending to a connection zone 38 near the periphery of the mattress cover 10. Each of the signal lines 26 comprises a laterally outwardly running portion 26a leading via a longitudinal portion 26b and a laterally inwardly running portion 26c to the same connection zone 38, from which connections are made to the control electronics.

As noted above, the textile layer 12 is covered on at least one of its faces by a coating. In the present embodiment this coating provides a barrier impermeable to liquid water (although it may be breathable, in the sense that it is not wholly impermeable to water vapour). The present embodiment uses a coating comprising plastics, and more specifically polyurethane, applied via a transfer coating process. This process is not novel in itself and is known to those skilled in the art, but briefly it involves casting the coating onto a transfer substrate (formed of paper in the present example) and then transferring the coating to the textile layer 12. The coating comprises three layers, each comprising polyurethane - a top coat, an intercoat and a tie coat. In the finished mattress cover, the top coat is outermost and the tie coat is adhered to the textile layer 12. Casting is a continuous process in which the transfer substrate passes through three stations to apply the three layers, each station serving to deposit a layer of polyurethane in liquid solution by knife over roll coating and then to apply heat in an oven to dry the polyurethane, evaporating its solvent content. After casting of the top coat, intercoat and tie coat in that order, the web is united with the textile material (itself formed as a continuous web at this stage) in a roller nip. The condition of the tie coat is chosen to provide sufficient penetration for a reliable bond, without the tie coat soaking into the textile to such a degree as to impair its desirable properties such as elasticity.

If one compares the performance of an uncoated textile sensor with that of a textile sensor provided with a coating, the latter is superior in that sensor hysteresis is reduced. If a typical textile sensor is put through a cycle in which pressure is first increased and then decreased, it is found that a given applied pressure during the pressure increase phase does not yield the same output signal as the same applied pressure during the pressure reduction phase, and that when pressure returns to its original value (which may be zero) the sensor output does not return to its baseline, but remains elevated. This undesirable phenomenon of hysteresis is well known in itself in relation to sensors, and complicates calibration and interpretation of sensor signals. While the present invention is not bound up with any specific explanation of this observation, it is thought that the reduction of hysteresis observed in sensors constructed according to the present invention may result at least in part from the ability of the coating, due to its elasticity, to return essentially to its original shape following removal of the applied pressure, and in so doing to assist the yarns of the textile sensor to return to their original (unloaded) configuration.

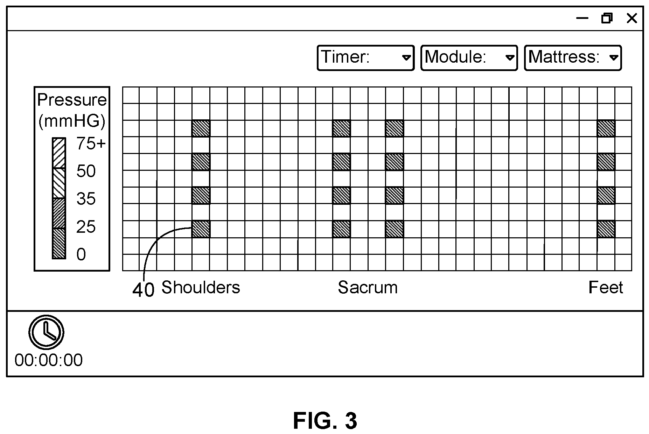

Signals from the textile sensors 18 may be interpreted and used in a range of different ways. Typically the current signals will be converted to digital form and processed in a digital computer. The graphical user interface depicted in Figure 3 provides a way to visualise the pressure profile, using indicator squares 40 corresponding to each of the textile sensors 18, the colour of each indicator square being adjusted to represent the pressure applied to the corresponding sensor. This form of graphical representation may however be dispensed with in practical commercial applications, with computer algorithms instead being used to draw inferences about patient needs and behaviours from the sensor outputs. For example, in one such algorithm a pressure sustained above a certain level for more than a predetermined period of time may trigger a warning that a patient needs to be turned, to redistribute pressure and reduce risk of development of bed sores. A sudden reduction in multiple pressure signals may be interpreted as an indication that the patient has got out of bed or sat up. Prolonged low variability of pressure signals may indicate that the patient needs attention.

## Claims

1. A textile panel (10) comprising a knitted textile layer (12) comprising yarn (14) of a first type and a coating applied to at least one face of the textile layer, the textile layer (12) comprising at least one textile sensor (18) formed by an electrically conductive region of the textile layer (12) which comprises yarn (16) of a second type incorporated in the knit or weave of the textile layer, the second type of yarn (16) being electrically conductive.

2. A textile panel (10) as claimed in claim 1 in which the coating is bonded to the textile layer (12).

3. A textile panel (10) as claimed in claim 1 or claim 2 in which the coating comprises an elastomer.

4. A textile panel (10) as claimed in any preceding claim in which the coating comprises plastics.

5. A textile panel (10) as claimed in any preceding claim in which the coating comprises a transfer coated layer.

6. A textile panel (10) as claimed in any preceding claim in which the textile sensor (18) is a resistive sensor having first and second electrical connections (20,22) which are physically separated from one another and are electrically connected through the conductive region, so that electrical resistance of the conductive region is measurable by passing an electrical current between the first and second electrical connections (20,22).

7. A textile panel (10) as claimed in any preceding claim comprising a pair of electrical conductors (20,22) leading from the textile sensor (18) to a peripheral region of the textile panel (10).

8. A textile panel as claimed in claim 7 in which the electrical conductors (20,22) comprise electrically conductive yarn incorporated in the knit of the textile layer (10).

9. A textile panel (10) as claimed in any preceding claim in which the coating is elastically deformable and is coupled to the textile layer (12) in such a manner that application of pressure loading to the textile panel (10) causes both the coating and the textile layer (12) to be deformed, and that upon removal of said loading the coating, in returning elastically to its unloaded form, assists the yarns of the textile panel (12) in returning to their unloaded form.

10. A textile panel as claimed in any preceding claim in which the second type of yarn (16) comprises metal coated fibre or metal core fibre or a conductive polymer.

11. A mattress cover or seat cover comprising a textile panel (10) as claimed in any preceding claim.

12. A method of manufacturing a textile panel (10), comprising knitting a textile layer (12) using a first type of yarn (14) and a second type of yarn (16), the second type of yarn (16) being incorporated in the knit or weave of the textile layer (12) in at least one predetermined region to form a textile sensor (18), the method further comprising applying a coating to the textile layer.

13. A method as claimed in claim 12 in which the coating is applied by a transfer coating process.
